# EUROPÄISCHE PATENTSCHRIFT

(11) **EP 1 286 030 B1**
(45) Veröffentlichungstag und Bekanntmachung des Hinweises auf die Patenterteilung: **25.01.2006**
(21) Anmeldenummer: 01119852.0
(22) Anmeldetag: 16.08.2001
(51) Int. Cl.: F02C 6/18, F02C 1/04

(54) **Gas- und Luftturbinenanlage**
Gas and air turbine powerplant
Installation avec combination de turbine à gaz et à air

(43) Veröffentlichungstag der Anmeldung: 26.02.2003
(73) Patentinhaber: SIEMENS AKTIENGESELLSCHAFT, 80333 München (DE)
(72) Erfinder: Reissig, Sergej, Dr., 91058 Erlangen (DE)

(56) Entgegenhaltungen:
- EP-A- 0 400 701
- EP-A- 1 058 073
- US-A- 4 751 814
- US-A- 6 050 082

## Beschreibung

Die Erfindung betrifft eine Kraftwerksanlage sowie ein Verfahren zum Betreiben einer Kraftwerksanlage.

Es sind Dampfkraftanlagen bekannt, bei denen eine Dampfturbine üblicherweise in einer Kraftwerksanlage zum Antrieb eines Generators, oder in einer Industrieanlage zum Antrieb einer Arbeitsmaschine, eingesetzt wird. Dazu wird der Dampfturbine als Strömungsmedium dienender heißer und druckbeaufschlagter Dampf zugeführt, der sich in der Dampfturbine arbeitsleistend entspannt. Nach seiner Entspannung gelangt der Dampf üblicherweise in einer der Dampfturbine nachgeschalteten Kondensator und kondensiert dort. Das Kondensat wird sodann als Speisewasser einem Dampferzeuger zugeführt und gelangt nach seiner Verdampfung erneut in die Dampfturbine, so dass im Allgemeinen ein geschlossener Wasser-Dampf-Kreislauf entsteht. Eine Anlage mit den dazu erforderlichen Komponenten, also insbesondere mit einer Dampfturbine und mit einem Dampferzeuger, wird auch als Dampfturbinen oder Dampfkraftanlage bezeichnet.

Ebenso bekannt sind Kraftwerkskonzepte bei denen ein Gasturbinenprozess mit einem Dampfturbinenprozess in einer gemeinsamen Anlage kombiniert werden. Bei einem derartigen Gas- und Dampfturbinenprozess ist einer Gasturbine abgasseitig ein Abhitzedampferzeuger nachgeschaltet, wobei das Abgas aus der Gasturbine zum Verdampfen von Wasser im Abhitzedampferzeuger genutzt wird. Der in dem Abhitzedampferzeuger unter Ausnutzung der Abhitze aus dem Abgas der Gasturbine erzeugte Dampf wird in einer dem Abhitzedampferzeuger nachgeschalteten Dampfturbinenanlage, welche im Allgemeinen mehrere Dampfturbinen aufweist, ausgenutzt. Ein derartiger Prozess hat wesentliche Vorteile zum Vergleich zum reinen Gasturbinenprozess. Die Hauptvorteile sind der hohe Wirkungsgrad und eine Leistungserhöhung. In modernen GUD-Anlagen werden Wirkungsgrade von bis zu 56 bis 58 % erzielt.

Sowohl eine Dampfkraftanlage als auch eine GUD-Anlage benötigen zur Dampferzeugung allerdings eine beträchtliche Menge Süßwasser, zumindest aber entsalzenes Meerwasser. Daher stellt der Betrieb einer Dampfkraftanlage oder Gas- und Dampfturbinenanlage in Ländern mit geringem Süßwasservorrat, beispielsweise in trocknen Wüstenländern Afrikas, ein Problem dar. Aufgrund des Süßwasserbedarfs der herkömmlichen Kraftwerkskonzepte auf Dampfbasis kommen ins solchem Regionen der Erde in der Regel daher nur die reinen Gasturbinenkraftwerke zum Einsatz. Der Wirkungsgrad eines Gasturbinenkraftwerks ist allerdings deutlich geringer als der Wirkungsgrad eine Kombikraftwerks oder eines konventionellen Dampfkraftwerks.

Die Schrift US-A-4,751,814 offenbart eine Gas- und Luftturbinenanlage mit einer Gasturbine, der abgasseitig ein Wärmetauscher zur Erwärmung von Luft primärseitig nachgeschaltet ist, wobei dem Wärmetauscher sekundärseitig eine Luftturbine nachgeschaltet ist.

Aufgabe der Erfindung ist es daher, eine Kraftwerksanlage anzugeben, die einen Gasturbinenbetrieb mit verbessertem Wirkungsgrad ermöglicht. Die Aubgabe wird gelöst durch eine Gas- und Lufturbinenanlage gemäss Anspruch 1.

Mit der Erfindung wird ein völlig neues Anlagenkonzept vorgestellt, das im Gegensatz zu den herkömmlichen Kombikraftwerken mit einem an einen Gasturbinenprozess angekoppelten Dampfprozess die Nutzung der Abhitze im Abgas der Gasturbine ohne den Weg über einen Dampfprozess ermöglicht. Zur Steigerung des Wirkungsgrads einer Gasturbinenanlage wird die Abhitze aus dem Abgas der Gasturbine nunmehr in einem völlig neuartigen Kombiprozess, nämlich in einem Gas- und Luftturbinenprozess genutzt. Durch den Verzicht auf Süßwasser ist die Gas- und Luftturbinenanlage der Erfindung besonders vorteilhaft in Gegenden der Erde einsetzbar, wo Süßwasser nur begrenzt verfügbar oder nur unter erheblichem Kostenaufwand gewinnbar ist. Von besonderem Vorteil ist es dabei, dass bestehende Gasturbinenkraftwerke mit überschaubarem Kostenaufwand zu einer Gas- und Luftturbinenanlage aufrüstbar sind. Der Wirkungsgradvorteil gegenüber einer reinen Gasturbinenanlage dürfte die Investitionskosten für eine derartige Aufrüstmaßnahme sehr bald übersteigen. Der Wirkungsgrad der Gas- und Luftturbinenanlage ist ersten Abschätzungen zufolge etwa um 9 bis 10 %-Punkte erhöht. Die Leistung einer solchen auf einem Gas- und Luftprozess basierenden Kombianlage erhöht sich um bis zu 24 % gegenüber einem reinen Gasturbinenprozess.

Gegenüber einer herkömmlichen Gas- und Dampfturbinenanlage ergibt sich für die Gas- und Luftturbinenanlage der Erfindung überdies ein deutlich geringerer Aufwand im Hinblick auf die Gestehungskosten, da wesentlich kostengünstigere Anlagenkomponenten, wie z.B. der Wärmetauscher und die Luftturbine, zum Einsatz kommen. Im Vergleich dazu ist beispielsweise ein Dampferzeuger mit dem nachgeschalteten Wasser-Dampfkreislauf und den Dampfturbinen bei einer GUD-Anlage gerade auch im Hinblick auf die Materialkosten erheblich teurer.

In Abhängigkeit vom gewählten Gasturbinentyp kann ein Wirkungsgrad von etwa 45 bis 50 % für die Gas- und Luftturbinenanlage erreicht werden. In wasserarmen Ländern erscheint daher dieses auf einem "GUL"-Prozess basierenden Anlagenkonzept besonders interessant. Die Abhitze aus dem Abgas der Gasturbine wird in dem abgasseitig der Gasturbine nachgeschalteten Wärmetauscher genutzt, um Luft, die dem Wärmetauscher sekundärseitig zugeführt wird zu erwärmen. Die so erwärmte Luft wird der dem Wärmetauscher nachgeschalteten Luftturbine zugeführt, wo sie sich arbeitsleistend entspannt.

In bevorzugter Ausgestaltung ist ein Luftverdichter vorgesehen, der dem Wärmetauscher sekundärseitig vorgeschaltet ist, so dass verdichtete Luft dem Wärmetauscher zur Erwärmung der verdichteten Luft zuführbar ist. Die Luft wird dabei im Luftverdichter von 1 bar bis auf etwa 5 bis 6 bar komprimiert. Die so komprimierte Luft wird dem Wärmetauscher zur Erwärmung der komprimierten Luft zugeführt. Durch den Einsatz eines Luftverdichters ist es möglich den Druck- und Temperaturzustand des der Luftturbine zuzuführenden Arbeitsmediums, d.h. der verdichteten und erwärmten Luft, entsprechend zu erhöhen. Dadurch steht der die Luftturbine antreibenden Luft mehr Energie zur Verfügung die arbeitsleistend an die Luftturbine zur Energieerzeugung abgegeben werden kann.

Vorzugsweise ist abgasseitig stromab dem Wärmetauscher ein weiterer Wärmetauscher zur Erwärmung von Luft primärseitig nachgeschaltet. Auf diese Weise ist eine Mehrfachnutzung der Abhitze des aus der Gasturbine abströmenden Abgases möglich. Ein Teil der Abhitze wird zunächst in dem Wärmetauscher zur Erwärmung des Arbeitsmediums für die Luftturbine, d.h. der Luft, verwendet. In einem nachgeschalteten zweiten Wärmetauscherprozess wird ein weiterer Teil der Abhitze dem Abgas in dem weiteren Wärmetauscher entzogen und auf Luft übertragen. Durch diesen mehrstufigen Prozess ist in Analogie zu einem Abhitzedampferzeuger die Realisierung eines "Abhitzelufterzeugers" möglich, wobei je nach Druck- und Temperaturzustand der in einer Abgas-Luft-Wärmetauscherstufe erwärmten Luft eine speziell darauf abgestimmte Luftturbine einsetzbar ist. Mit einem mehrstufigen Betrieb ergibt sich insbesondere auch der Vorteil, dass die Ausgangsleistung der Gas- und Luftturbinenanlage in einfacher Weise an den jeweils nachgefragten Energiebedarf anpassbar ist, d.h. eine hohe Verfügbarkeit.

Vorzugsweise ist die Luftturbine abluftseitig an den weiteren Wärmetauscher angeschlossen. Die Abluft der Luftturbine weist noch einen gewissen Wärmegehalt auf, der in einem Wärmetauscherprozess nutzbar ist. Die Zufuhr der in der Luftturbine teilentspannten und teilabgekühlten Abluft zu dem weiteren Wärmetauscher erfolgt dabei auf der Primärseite des weiteren Wärmetauschers, so dass auf der Sekundärseite des weiteren Wärmetauschers die Abwärme an ein Medium, beispielsweise ein weiteres Arbeitsmedium, wie z.B. Luft eines niedrigen Temperaturneveaus, übertragen werden kann. Dem weiteren Wärmetauscher kann somit primärseitig teilweise abgekühltes Abgas aus der Gasturbine und zugleich teilentspannte und teilweise abgekühlte Luft aus der Luftturbine zugeführt werden. In dieser Kombination ist die Abwärme aus dem Abgas der Gasturbine und der Abluft aus der Luftturbine besonders vorteilhaft nutzbar. Der Abluftstrom und der Abgasstrom können dabei dem weiteren Wärmetauscher separat, d.h. in separaten primärseitigen Leitungssystemen, oder aber als ein Abgas-Abluft-Gemisch gemeinsam zugeführt werden. In letzterem Falle ist eine Mischstelle vorgesehen, an der der bereits teilweise abgekühlte Abgasstrom mit dem Abluftstrom aus der Luftturbine zusammengeführt wird. Stromab der Mischstelle erfolgt dann der Wärmetaucherprozess in dem weiteren Wärmetauscher, wobei das Abgas-Abluft-Gemisch Wärme an eine sekundärseitig in dem weiteren Wärmetauscher geführten Medium, z.B. Luft, abgeben kann. Das sekundärseitig in dem weiteren Wärmetauscher geführte Medium, z.B. Luft erwärmt sich dementsprechend und steht dem Gas- und Luftturbinenprozess zur Energieerzeugung zur Verfügung.

In einer bevorzugten Ausgestaltung kann die Nutzung der in dem weiteren Wärmetauscher verfügbaren Wärme dadurch erfolgen, dass dem weiteren Wärmetauscher sekundärseitig ein Luftverdichter vorgeschaltet ist, so dass verdichtete Luft dem weiteren Wärmetauscher zur Erwärmung zuführbar ist. Durch die Verdichtung in einem Luftverdichter können höhere Druck- und Temperaturzustände der in dem weiteren Wärmetauscher erwärmten Luft erreicht werden, was besonders günstig für die weitere Verwendung der so erwärmten und komprimierten Luft in dem Gas- und Luftturbinenprozess ist. Der hierzu verwendete Luftverdichter kann dabei verschieden von dem Luftverdichter sein, der dem Wärmetauscher sekundärseitig vorgeschaltet ist.

Es kann sich aber auch bei den dem Wärmetauscher und dem weiteren Wärmtauscher sekundärseitig vorgeschalteten Luftverdichtern auch um ein und den selben Luftverdichter handeln, wobei jeweils ein Teilstrom der im Verdichter verdichteten Luft dem Wärmtauscher und dem weiteren Wärmetauscher sekundärseitig zugeführt werden. Es ist auch möglich, dass dem Wärmetauscher und dem weiteren Wärmtauscher komprimierte Luft verschiedener Druckzustände durch eine jeweilige Anzapfung an einer Druckstufe des einen Luftverdichters zugeführt werden. Je nach Verfügbarkeit eines Luftverdichters oder Anforderung an die Gas- und Luftturbinenanlage hinsichtlich des Wirkungsgrades und der Leistung kann hier eine flexible Anpassung des Anlagenkonzepts vorgenommen werden. Die komprimierte Luft, die dem weiteren Luftverdichter oder ggf. einer zweiten Druckstufe desselben Luftverdichters entnommen wird, hat einen Druckzustand von typischerweise etwa 2 bis 2,5 bar.

In einer besonders bevorzugten Ausgestaltung ist dem weiteren Wärmetauscher eine weitere Luftturbine sekundärseitig nachgeschaltet. Auf diese Weise ist die in dem weiteren Wärmetauscher zur Verfügung stehende Abwärme aus der Abluft bzw. dem Abgas in besonders vorteilhafter Weise nutzbar. Dazu wird in dem weiteren Wärmetauscher Wärme von dem Abgas bzw. dem Abgas-Abluft-Gemisch an die sekundärseitig geführte verdichtete Luft übertragen und die so im Wärmetausch erwärmte verdichtete Luft steht zur arbeitsleistenden Entspannung in der weiteren Luftturbine zur Verfügung. Der Gesamtwirkungsgrad der Gas- und Luftturbinenanlage kann somit durch das Vorsehen zumindest zweiter Luftturbinen weiter gesteigert werden. Jede der Luftturbinen ist dabei einem Wärmetauscher oder einer Wärmetauscherstufe zugeordnet, so dass ein mehrstufiger Betrieb der Gas- und Luftturbinenanlage unter besonders wirkungsvoller Ausnutzung der zur Verfügung stehenden Abgaswärme der Gasturbine erzielbar.

Vorzugsweise weist die Gas- und Luftturbinenanlage einen Generator zur Umwandlung von mechanischer Energie in elektrische Energie auf.

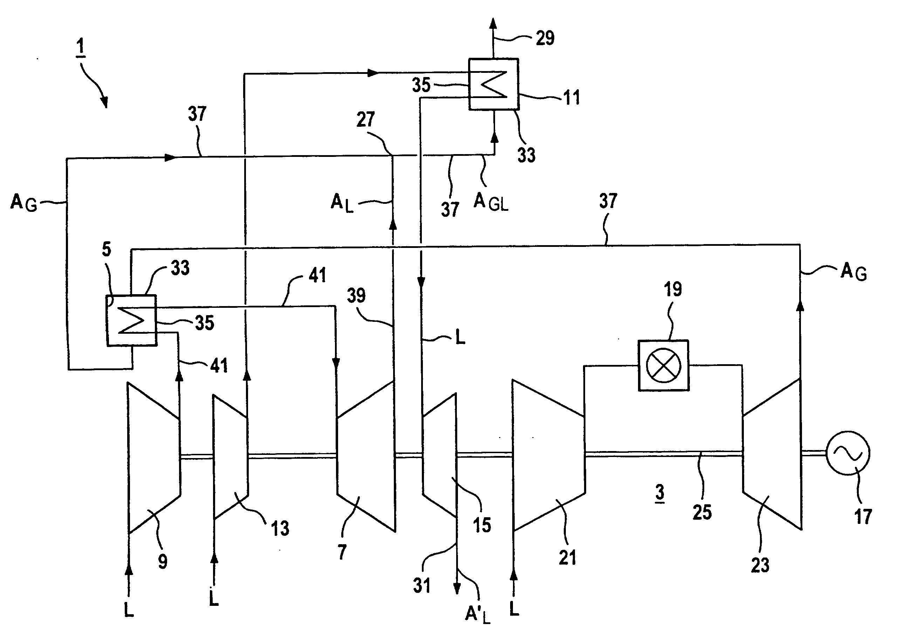

Die Erfindung wird im folgenden anhand einer Zeichnung näher erläutert. Dabei zeigt die einzige Figur eine Gas- und Luftturbinenanlage.

Das Schaltungskonzept einer Gas- und Luftturbinenanlage 1 gemäß der Erfindung ist in der Figur dargestellt. Die Gas- und Luftturbinenanlage 1 weist hierbei eine Gasturbine 3 auf. Die Gasturbine 3 umfasst eine Turbine 23 sowie einen der Turbine 23 vorgeschalteten Verdichter 21 sowie eine Brennkammer 19 zur Verbrennung eines Brennstoffs. Weiter umfasst die Gas- und Luftturbinenanlage 1 eine Luftturbine 7 sowie einen der Luftturbine 7 zugeordneten und dieser vorgeschalteten Luftverdichter 9. Die Gasturbine 3, die Luftturbine 7 sowie der Luftverdichter 9 sind auf einer gemeinsamen Welle 25 angeordnet. Es ist aber auch durchaus möglich, dass diese Anlagenkomponenten nicht auf einer gemeinsamen Welle angeordnet sind, sondern dass verschiedene Wellen vorgesehen sind. Zur Erzeugung elektrischer Energie weist die Gas- und Luftturbinenanlage einen Generator 17 auf, der über die Welle 25 antreibbar ist. Abgasseitig ist der Gasturbine 3 ein Wärmetauscher 5 nachgeschaltet. Dazu führt eine Abgasleitung 37 von der Turbine 23 auf die Primärseite 33 des Wärmetauschers 5. Vom Verdichteraustritt des Luftverdichters 9 führt eine Leitung 41 zur Luftturbine 7. Die Leitung 41 ist in die Sekundärseitig 35 des Wärmtauschers 5 geschaltet. In Strömungsrichtung der in dem Luftverdichter 9 verdichteten Luft L ist dem Wärmetauscher 5 mithin sekundärseitig die Luftturbine 7 nachgeschaltet. An die Luftturbine 7 ist abluftseitig eine Abluftleitung 39 angeschlossen über die die in der Luftturbine 7 teilentspannte und teilweise abgekühlte Abluft A_{L} abführbar ist. Die Abluftleitung 39 mündet in Strömungsrichtung der Abluft A_{L} betrachtet stromab an einer Mischstelle 27 in die der Gasturbine 3 zugeordnete Abgasleitung 37. Auf diese Weise ist Abgas A_{G} aus der Gasturbine 3 mit Abluft A_{L} aus der Luftturbine 7 mischbar, sodass ein Abgas-Abluft-Gemisch A_{GL} an der Mischstelle 27 gebildet wird. Stromabwärts von der Mischstelle 27 betrachtet mündet die Abgasleitung 37 auf der Primärseitig 33 in einen weiteren Wärmetauscher 11. Mithin ist dem Wärmetauscher 5 abgasseitig stromab der weitere Wärmetauscher 11 primärseitig nachgeschaltet. Die Luftturbine 7 ist abluftseitig ebenfalls an den weiteren Wärmetauscher 11 angeschlossen. Dabei ist es auch möglich, dass die Abgasleitung 37 und Abluftleitung 39 nicht, wie in der Figur dargestellt, an einer Mischstelle 27 zusammengeführt sind, sondern es ist auch ein separater Anschluss der Abgasleitung 37 und der Abluftleitung 39 an der Primärseite 33 des weiteren Wärmtauschers 11 denkbar. Der primärseitige Auslass des weiteren Wärmetauschers 11, der das Abgas-Abluft-Gemisch A_{GL} führt, mündet in einen Kamin 29. Dem weiteren Wärmetauscher 11 ist an der Sekundärseite 35 ein Luftverdichter 13 vorgeschaltet. Hierdurch kann im Luftverdichter 13 verdichtete Luft L dem weiteren Wärmetauscher 11 zugeführt werden. Auf der Sekundärseite 35 des weiteren Wärmetauschers 11 nachgeschaltet ist eine weitere Luftturbine 15 vorgesehen. Die weitere Luftturbine 15 ist mit im Luftverdichter 13 komprimierter und im weiteren Wärmetauscher 11 erwärmter Luft L beaufschlagbar, durch welche die Luftturbine 15 antreibbar ist. Nach arbeitsleistender Entspannung der Luft L in der weiteren Luftturbine 15 verlässt die entspannte Luft L als Abluft A_{L}' über eine Luftauslass 31 die Luftturbine 15 in die Atmosphäre.

Im Betrieb der Gas- und Luftturbinenanlage 1 wird von dem Verdichter 21 der Gasturbine 3 Frischluft L aus der Umgebung angesaugt. Die Luft L wird im Verdichter 21 verdichtet und dadurch gleichzeitig vorgewärmt. In der Brennkammer 19 wird die Luft L mit einem flüssigen oder gasförmigen Brennstoff zusammengebracht und verbrannt. Die heißen Verbrennungsgase werden der Turbine 23 zugeführt, wobei eine Turbineneintrittstemperatur von etwa 750 °C bis 1200 °C für das Heißgas erreicht wird. In der Turbine 23 erfolgt eine Entspannung und gewisse Abkühlung des Heißgases, welches durch die nicht näher dargestellten Turbinenstufen der Turbine 23 strömt. Das noch heiße Abgas A_{G} der Gasturbine 3 und die im Luftverdichter 9 bis auf etwa 5 bis 6 bar komprimierte Luft werden in den Wärmetauscher 5 geleitet. Die Abgasleitung 37 ist dabei auf der Primärseite des Wärmetauschers 5 angeschlossen, während die die Luft L aus dem Luftverdichter 9 führende Leitung 41 an die Sekundärseite des Wärmetauschers 5 angeschlossen ist.

Im Wärmetauscher 5 wird zumindest ein Teil der verfügbaren Abhitze des Abgases A_{G} an die im Luftverdichter 9 komprimierte Luft L übertragen. Die so aufgewärmte komprimierte Luft L wird der Luftturbine 7 zugeführt. In der Luftturbine 7 entspannt die Luft L und verrichtet dabei mechanische Arbeit. Das im Wärmetauscherprozess in dem Wärmetauscher 5 teilweise abgekühlte Abgas A_{G} sowie die Abluft A_{L} aus der Luftturbine 7 werden an der Mischstelle 27 gemischt und anschließend das dabei gebildete Abgas-Abluft-Gemisch A_{GL} über die Abgasleitung 37 dem weiteren Wärmetauscher 11 auf der Primärseite 33 zugeführt. Auf der Sekundärseite 35 des weiteren Wärmetauschers wird die in der Luftturbine 13 komprimierte Luft L zugeführt, die sich anschließend in dem Wärmetauscherprozess mit dem Abgas-Abluft-Gemisch A_{GL} erwärmt. Die in der Luftturbine 13 komprimierte Luft hat hierbei einen Druck von etwa 2 bis 2,5 bar. Die im weiteren Wärmetauscher 11 erwärmete Luft L wird der weiteren Luftturbine 15 zugeführt, wo sie sich arbeitsleistend entspannt. Die mechanische Energie von der Gasturbine 3 und von den Luftturbinen 7, 15 wird mittels des Generators 17 in elektrische Energie umgewandelt. Im Falle einer Gas- und Luftturbinenanlage 1, die nicht in einer Einwellenkonfiguration konzipiert ist, können auch mehrere Generatoren vorgesehen sein, die einer jeweiligen Turbine 3, 7, 15 zugeordnet sind.

Die Erfindung zeichnet sich durch ein neues Anlagenkonzept für eine Kraftwerksanlage aus, bei der eine Gas- und Luftturbinenanlage vorgeschlagen wird. Diese weist eine Gasturbine 3 auf, wobei der Gasturbine 3 abgasseitig ein Wärmetauscher 5 zur Erwärmung von Luft primärseitig nachgeschaltet ist, welchem Wärmetauscher 5 sekundärseitig eine Luftturbine 7 nachgeschaltet ist. Im Betrieb der Gas- und Luftturbinenanlage 1 wird die Abhitze im Abgas A_{G} der Gasturbine 3 arbeitsleistend zum Antreiben der Luftturbine 7, 15 verwendet. Hierbei wird Luft L im Wärmetausch mit dem Abgas A_{G} und/oder einem Abgas-Abluft-Gemisch A_{GL} erwärmt und erwärmte Luft L der Luftturbine 7, 15 zugeführt. Mit der Erfindung ist ein relativ einfaches Aufrüsten bzw. Umrüsten von herkömmlichen Gasturbinenkraftwerken möglich, wobei durch den neuartigen Kombiprozess, nämlich einem "Gas- und Luft"-Prozess ein wesentlich höherer Wirkungsgrad von ca. 45 bis 50 % - abhängig vom gewählten Gasturbinentyp - erreichbar ist. Demzufolge zeichnet sich die Gas- und Luftturbinenanlage 1 durch eine gegenüber herkömmlichen reinen Gasturbinenkraftwerken höhere Leistung aus. Im Vergleich zu bekannten Gas- und Dampfturbinenanlagen ist ein deutlich geringerer Gestehungsaufwand zu verzeichnen. Die Gas- und Luftturbinenanlage 1 der Erfindung ist besonders für den Betrieb in wasserarmen Gegenden geeignet, wo nur begrenzte Süßwasservorräte vorhanden sind oder die Aufbereitung von Wasser sich als besonders kostspielig gestaltet.

## Patentansprüche

1. Gas- und Luftturbinenanlage (1) mit einer Gasturbine (3), der abgasseitig ein Wärmetauscher (5) zur Erwärmung von Luft (L) primärseitig nachgeschaltet ist, welchem Wärmetauscher (5) sekundärseitig eine Luftturbine (7) nachgeschaltet ist, **dadurch gekennzeichnet, dass** abgasseitig stromab dem Wärmetauscher (5) ein weiterer Wärmetauscher (11) zur Erwärmung von Luft (L) primärseitig nachgeschaltet ist, wobei die Luftturbine (7) abluftseitig an den weiteren Wärmetauscher (11) angeschlossen ist, wobei eine Abluftleitung (39) der Luftturbine (7) mit einer Abgasleitung (37) stromabwärts des Wärmetauschers (5) an einer Mischstelle (27) verbunden ist.

2. Gas- und Luftturbinenanlage (1) nach Anspruch 1, wobei ein Luftverdichter (9) vorgesehen ist, der dem Wärmetauscher (5) sekundärseitig vorgeschaltet ist, so dass verdichtete Luft (L) dem Wärmetauscher (5) zur Erwärmung der verdichteten Luft (L) zuführbar ist.

3. Gas- und Luftturbinenanlage (1) nach Anspruch 1 oder 2, wobei ein weiterer Luftverdichter (13) vorgesehen ist, der dem weiteren Wärmetauscher (11) sekundärseitig vorgeschaltet ist, so dass verdichtete Luft (L) dem weiteren Wärmetauscher (11) zur Erwärmung zuführbar ist.

4. Gas- und Luftturbinenanlage (1) nach einem der Ansprüche 1 bis 3, wobei dem weiteren Wärmetauscher (11) eine weitere Luftturbine (15) sekundärseitig nachgeschaltet ist.

5. Gas- und Luftturbinenanlage (1) nach einem der Ansprüche 1 bis 4, mit einem Generator (17) zur Umwandlung von mechanischer Energie in elektrische Energie.

## Claims

1. Gas turbine and air turbine installation (1), having a gas turbine (3) to which, downstream of its exhaust gas end, the primary side of a heat exchanger (5) for heating air (L) is connected, which heat exchanger (5) has an air turbine (7) connected downstream of its secondary side, **characterized in that** the primary side of a further heat exchanger (11) for heating air (L) is connected downstream of the exhaust gas end of the heat exchanger (5), in which the air turbine (7) is connected at its exhaust air end to the further heat exchanger (11), in which an exhaust air main (39) of the air turbine (7) is connected to an exhaust gas main (37) downstream of the heat exchanger (5) at a mixing location (27).

2. Gas turbine and air turbine installation. (1) according to Claim 1, in which an air compressor (9), which is connected upstream of the secondary side of the heat exchanger (5), is provided so that compressed air (L) can be supplied to the heat exchanger (5) for heating.

3. Gas turbine and air turbine installation (1) according to Claim 1 or 2, in which a further air compressor (13), which is connected upstream of the secondary side of the further heat exchanger (11), is provided so that compressed air (L) can be supplied to the further heat exchanger (11) for heating.

4. Gas turbine and air turbine installation (1) according to one of Claims 1 to 3, in which a further air turbine (15) is connected downstream of the secondary side of the further heat exchanger (11).

5. Gas turbine and air turbine installation (1) according to one of Claims 1 to 4, having a generator (17) for converting mechanical energy into electrical energy.

## Revendications

1. Installation (1) de turbine à gaz et de turbine à air, comprenant une turbine (3) à gaz en aval de laquelle, côté gaz d'échappement, est monté côté primaire un échangeur de chaleur (5) pour réchauffer de l'air (L), une turbine (7) à air étant montée en aval côté secondaire de l'échangeur de chaleur (5), **caractérisée en ce qu'**en aval côté gaz d'échappement de l'échangeur (5) de chaleur est monté côté primaire un autre échangeur de chaleur (11) pour réchauffer de l'air (L), la turbine (7) à air étant raccordée côté air d'échappement à l'autre échangeur de chaleur (11), un conduit (39) pour de l'air d'échappement de la turbine (7) à air communiquant avec un conduit (37) pour les gaz d'échappement en aval de l'échangeur de chaleur (5) en un point (27) de mélange.

2. Installation (1) de turbine à gaz et de turbine à air suivant la revendication 1, dans laquelle il est prévu un compresseur (9) d'air qui est monté côté secondaire en amont de l'échangeur de chaleur (5), de sorte que de l'air (L) comprimé peut être envoyé à l'échangeur de chaleur (5) pour réchauffer l'air (L) comprimé.

3. Installation (1) de turbine à gaz et de turbine à air suivant la revendication 1 ou 2, dans laquelle il est prévu un autre compresseur (13) d'air qui est monté en amont côté secondaire de l'autre échangeur de chaleur (11), de sorte que de l'air (L) comprimé peut être envoyé à l'autre échangeur de chaleur (11) en vue d'être réchauffé.

4. Installation (1) de turbine à gaz et de turbine à air suivant l'une des revendications 1 à 3, dans laquelle il est monté en aval du côté secondaire de l'autre échangeur de chaleur (11) une autre turbine (15) à air.

5. Installation (1) de turbine à gaz et de turbine à air suivant l'une des revendications 1 à 4, comprenant une génératrice (17) de transformation d'énergie mécanique en énergie électrique.
